Europäisches Patentamt

(19) **European Patent Office** (11) Numéro de publication: **0 079 286**

**Office européen des brevets** **B1**

(12) **FASCICULE DE BREVET EUROPÉEN**

(45) Date de publication du fascicule du brevet: (51) Int. Cl. ⁵ : **A 47 J 36/28,** B 65 D 81/32
21.03.90

(21) Numéro de dépôt: 82402046.5

(22) Date de dépôt: 08.11.82

(54) Récipient alimentaire avec moyens de déclenchement d'un processus de chauffage intégré.

(30) Priorité: 09.11.81 FR 8120904
08.10.82 FR 8217033

(43) Date de publication de la demande:
18.05.83 Bulletin 83/20

(45) Mention de la délivrance du brevet:
21.03.90 Bulletin 90/12

(84) Etats contractants désignés:
AT BE CH DE GB IT LI LU NL SE

(56) Documents cité:
CH-A-553 692
FR-A-2 060 905
FR-A-2 348 121
US-A-3 561 424
US-A-3 871 357

(73) Titulaire: **Benmussa, Simon**
**94 Bld. du Pape Jean XXIII**
**F-06300 Nice (FR)**

(72) Inventeur: **Benmussa, Simon**
**94 Bld. du Pape Jean XXIII**
**F-06300 Nice (FR)**

(74) Mandataire: **Hautier, Jean-Louis**
**Cabinet Hautier Office Méditerranéen de Brevets**
**d'Invention et de Marques 24 rue Masséna**
**F-06000 Nice (FR)**

LIBERGRAF, STOCKHOLM 1990

## Description

L'invention concerne un récipient alimentaire jetable à chauffage intégré du type défini dans le préambule de la revendication 1 ainsi qu'un récipient alimentaire rechargeable à chauffage intégré du type défini dans le préambule des revendications 13 et 14.

Il existe actuellement de nombreux récipients qui sont auto-chauffants. Ces récipients ont de nombreux inconvénients. Ainsi il est difficile de stocker ces récipients pendant plusieurs jours.

Les produits réactifs, non protégés de manière efficace dans un emballage, deviennent inopérants avec le temps, en général après cinquante à soixante dix jours.

Les moyens utilisés pour déclencher la réaction chimique qui produit la chaleur pour réchauffer les aliments sont plus ou moins efficaces.

Généralement, il y a plusieurs poches de réactifs, une poche contenant de l'oxyde de calcium ou chaux-vive, ou de l'hydroxyde de potassium et de l'acide orthophosphorique ou de l'oxyde de calcium ou chaux vive et une poche d'eau, un moyen étant prévu pour crever ces poches pour permettre la réaction. La poche est disposée dans la partie supérieure ce qui provoque une réaction exothermique rapide mais limitée du fait du mauvais mélange qui s'opère entre l'eau et le réactif.

Il existe de nombreux brevets qui décrivent des récipients auto-chauffants; cependant, leur conception actuelle comporte de graves inconvénients, mauvaise combustion de la chaux vive, déclenchement de la réaction intempestif ou accidentel, ce qui peut être dangereux. La présente invention tend, au contraire, en améliorant le dispositif qui déclenche la réaction, à augmenter la sécurité de ces récipients et assurer une bonne réaction de toute la chaux vive.

Le brevet allemand 1 214 600 a été conçu pour un mélange bien défini de jus de fruit et de lait, et n'entre donc pas dans l'utilisation de mélanges réactifs. Le brevet américain n° 3 085 681 ne peut également pas servir dans ce type d'utilisation sans risques. L'eau doit forcément se trouver dans la poche intérieure, la chaux vive ne peut absolument pas imprégner entièrement l'eau et cela par la disposition même des deux enveloppes – d'où une mauvaise combustion de la chaux vive. De plus, la poche extérieure exploserait sous la pression de vapeur dégagée par la chaux vive au moment de la réaction, et si cela ne se produisait pas, la vapeur resterait enfermée et donc ne chaufferait en aucun cas les aliments d'un troisième container. Le brevet américain n°3 871 357 sur le plan ouverture du pochon d'eau ne l'ouvre qu'une fois sur trois ou quatre – car le pochon est libre et la languette également dans son application commerciale – mais même dans le brevet, les risques d'insécurité sont grands, une lame tranchante sur la languette peut, si les aliments sont lourds, couper la barquette les contenant, ou la crever en actionnant ladite languette, en position arrêt, et pour peu qu'il y ait du jus, la réaction s'enclencherait immédiatement. En bougeant la barquette, le pochon d'eau peut se crever de lui-même en allant se heurter à la pointe de la languette, d'où un déclenchement non contrôlé de la réaction. Dans le brevet français 2 348 121 décrivant un récipient alimentaire jetable du type défini dans le préambule de la revendication 1, la bande adhésive fait office de fermeture hermétique d'un pochon d'eau, cela est irrationnel, car la moindre humidité, la chaleur trop élevée ou des températures très basses, peuvent décoller la bande adhésive en sorte que la réaction pourrait avoir lieu à tout moment et serait incontrôlée. Dans ce brevet français 2 348 121, la poche d'eau est accrochée à une extrémité et le cordon indépendant de la poche à une autre extrémité - cela permet un mouvement certain à l'intérieur de la barquette de chauffe, d'où un risque certain de déchirure et de réaction incontrôlée du réactif pendant sa confection, son stockage, son transbordement ou son transport.

Un procédé suisse, connu sous les noms de Pozel, Blanchat, Bertrand, est commercialisé, il est de conception identique en ce qui concerne l'assemblage des barquettes et son ensemble au brevet américain n° 2 871 357 et aux brevets américain et allemand cités plus haut ainsi qu'au brevet français 2 348 121 pour l'ouverture du pochon d'eau. Ce dernier est agrafé par une extrémité à une petite plaque de carton ainsi que le cordon d'ouverture qui, tout en étant indépendant du pochon, est, lui aussi, agrafé à une extrémité sur ledit carton. Le tout se promène librement et sans ancrage dans la barquette de chauffe – d'où un danger permanent suscité par les agrafes qui peuvent, soit déchirer la barquette recevant les aliments – ainsi le jus déclencherait une réaction – soit également percer la barquette de chauffe et même le pochon d'eau, ce qui provoquerait la réaction à un moment inopportun.

Le brevet CH-A-553 692 Marl Christen décrit un container en plastique pour l'extérieur, un container en aluminium pour les aliments qui vient se poser dessus et, entre les deux, un espace vide dans lequel sont déposées au fond et collées sur le fond de la boîte en plastique une poche d'eau en matière plastique et une poche destructible à l'eau remplie de chaux vive, le tout est percé par des aiguilles qui sont attenantes à la face interne du couvercle, qui, une fois placées sous la boîte en position retournée viennent percer le fond en plastique de la boîte à la suite d'une pression sur celle-ci, et par la même occasion viennent percer la poche d'eau qui, à son tour, détruit la poche de chaux vive.

Le brevet US-A-3 561 424 Anthony C. Failla décrit un récipient alimentaire rechargeable à chauffage intégré du type défini dans le préambule des revendications 13 et 14 disposé sur un autre compartiment de chauffe qui contient un sac de produit réactif au fond et au dessus un sac d'eau. En vissant à fond le compartiment de chauffe contre le compartiment alimentaire, on crève le sac d'eau au moyen d'un pic disposé à la base du compartiment alimentaire.

Il est également à remarquer que dans tous ces brevets cités ci-dessus, la chaux vive est aussi en constant déplacement à l'intérieur de la barquette de chauffe – d'où un mauvais fonctionnement par manque de combustion totale ou une combustion en un seul endroit de la barquette, qui, ainsi, ne permet pas la chauffe parfaite des aliments contenus dans la barquette supérieure où, très souvent, une seule partie est chaude.

D'autre part, les barquettes existantes ont une poche d'eau plate couvrant la presque totalité de la surface de chauffe – ce qui provoque un écran pour la diffusion de calories à la barquettes supérieure contenant les aliments.

La présente invention vise à améliorer les récipients alimentaires du type jetable décrit dans le FR-A-2 348 121 ainsi que les récipients alimentaires du type rechargeable décrit dans le US-A-3 561 424. Conformément à l'invention ces améliorations sont obtenues par les caractéristiques contenus respectivement dans la partie caractérisante de la revendication 1 et la partie caractérisante des revendications 13 et 14.

Des modes préférentiels de réalisation de l'invention font l'objet des revendications dépendantes 2 à 12 et 15 à 17.

Les perfectionnements apportés à l'invention concernent le déclenchement de la réaction toujours contrôlé, une réaction complète des produits, un chauffage homogène des produits alimentaires.

La barquette auto-chauffante, selon l'invention, est conçue par superposition d'éléments dans lesquels s'intègre judicieusement la barquette de chauffe qui est totalement indépendante. Les normes en vigueur dans la législation de l'emballage en ce qui concerne la sécurité et l'hygiène sont réunies dans cette technique.

Contrairement à cela, pour les barquettes existantes il y a un assemblage entre la barquette contenant les aliments et la feuille d'aluminium souple servant de barquette de chauffe dans laquelle sont incorporés la chaux vive et le pochon d'eau. Dès lors, la barquette recevant les aliments ne dépasse jamais 80 microns pour des raisons financières et techniques de repliage, on peut craindre des accidents dûs à une fausse manoeuvre de l'utilisateur soit en perçant le fond de la barquette alimentaire et alors le jus du repas provoquerait une réaction avec la chaux vive, soit en crevant le pochon d'eau, le même résultat serait atteint.

L'invention permet de mettre toutes les garanties d'hygiène et de sécurité au profit de l'utilisateur, sans pour cela perdre en efficacité.

A cet effet, la barquette recevant les aliments peut être de 80 microns ou plus, mais elle est séparée de la barquette de chauffe par un vide de 5 mm environ et qui plus est, il existe un opercule de sécurité de la barquette de chauffe atteignant 40 microns, soit une épaisseur de 120 microns plus 5 mm de vide – l'utilisateur est à l'abri de toute fausse manoeuvre.

Pendant et après la réaction accomplie, l'opercule reste sur la barquette de chauffe, le cordon d'ouverture provoque uniquement une coupe de sa largeur en son centre dans le sens longitudinal, pour laisser échapper la vapeur qui va chauffer la barquette contenant les aliments.

L'invention évite tous ces inconvénients.

Ainsi des moyens permettent de conserver les produits réactifs de treize à quatorze mois. Des moyens d'ouverture des poches permettent d'obtenir une réaction chimique progressive et totale.

La poche d'eau peut comporter un moyen de contrôle du débit de l'eau de manière à contrôler et éventuellement stopper la réaction.

Le récipient selon l'invention est composé d'un support qui comporte un ou plusieurs logements pour le ou les produits alimentaires, un logement pour le réactif est monté sur glissières de manière à faire office de tiroir, l'action du tiroir en position de fermeture provoque la réaction en permettant le mélange des produits réactifs avec l'eau.

A cet effet, le support comporte une ouverture dont les côtés intérieurs comportent des glissières qui permettent au tiroir contenant les réactifs de coulisser et de se ranger dans ledit support.

Un moyen contendant ou coupant, disposé à l'entrée de ladite ouverture, ouvre la poche d'eau provoquant le mélange des produits réactifs.

La barquette auto-chauffante, selon l'invention, est composée à cet effet d'un support qui fait office de logement et de barquette de protection pour contenir, au fond, la barquette de chauffe proprement dite et au-dessus de celle-ci la barquette dite "alimentaire", celle qui contient les produits alimentaires à réchauffer. La barquette alimentaire est, de préférence, en feuille d'aluminium pour avoir un bon contact avec la barquette de chauffe qui est en dessous. La poche qui contient l'eau est un boudin qui est maintenu à ses deux extrémités par des coussinets de manière à ce que ledit boudin soit suspendu au-dessus du fond, à quelques dizièmes de millimètres de la barquette de chauffe. Cette suspension du boudin d'eau permet, au moment de l'ouverture, une très bonne répartition de l'eau sous la chaux vive, alors qu'actuellement l'eau et la chaux vive forment rapidement des boules ou des grumeaux qui ne réagissent pas complétement. Entre la barquette alimentaire et la barquette de chauffe est disposé un opercule qui est, lui aussi, ouvert en même temps que la poche ou le boudin d'eau par le moyen de déclenchement de la réaction.

Le boudin, ou poche, ou container d'eau peut être fait de plusieurs matériaux assurant une soudure parfaite. Ces matériaux doivent offrir une barrière totalement étanche aux risques de suintement ou de transpiration ou d'humidité.

Il peut être donc utilisé du polypropylène verni – du polyéthylène spécial avec un taux de déchirure très élevé, certains polyéthylènes haute ou moyenne densité, des complexes polyesthère /polyéthylène ou polyétylène/polypropylène, tous avec un taux de déchirure élevé.

A l'inverse des autres brevets, le boudin d'eau est flanqué, dans le sens de sa longueur au centre de la paroi inférieure, d'une languette, ou bande, ou cordon de déchirure, d'une longueur étudiée en fonction des dimensions du boudin d'eau, de la barquette de chauffe et du mode d'ouverture choisi. Ledit cordon de déchirure est collé, thermosoudé ou fixé au boudin, et son matériau est fonction de celui du boudin, mais aussi de l'opercule d'étanchéité. Il doit permettre à ce dernier un scellement parfait, sans que celui-ci n'adhère à l'opercule. Ce cordon de déchirure doit avoir une longueur suffisante pour revenir vers l'arrière et sortir du support ou "barquette de protection" par un orifice spécialement étudié dans sa position et son diamètre, et servant également de cheminée d'évacuation de vapeur, cet orifice étant obturé pendant le stockage.

Le cordon de déchirure est collé, thermosoudé ou fixé à l'extérieur sur le flan inférieur dudit boudin. Sur les extrémités avant du boudin d'eau et de l'opercule, de chaque côté du cordon de déchirure, une amorce de déchirure est pratiquée, de manière qu'en exerçant une traction sur ledit cordon, qui est placé au centre dudit boudin et de l'opercule, une partie égale à sa largeur ou à son diamètre soit retirée de l'opercule ainsi qu'au boudin d'eau, de façon régulière et continue. Ce retrait de matière, dû à la traction exercée sur le cordon, permet au boudin d'eau, dont les parois inférieures et supérieures ont subi ce découpage total et régulier d'une bande de ces dites parois, d'irriguer régulièrement, totalement, rapidement, cela grâce aux quelques dixièmes de millimètres d'espace laissé entre le boudin reposant sur les coussinets et le fond de la barquette de chauffe, c'est-à-dire au fait que le boudin d'eau est suspendu par ses extrémités dans le fond de la barquette de chauffe. Cette opération permet, grâce au découpage opéré sur l'opercule et au retrait total d'une bande égale à la largeur de la languette, de laisser échapper la vapeur créée par la réaction exothermique et de chauffer ainsi les aliments contenus dans la barquette supérieure sans diminuer la sécurité due à l'épaisseur dudit opercule qui reste en place.

Dans les autres brevets, la languette ou cordon n'a qu'une fonction et une utilité, elle déchire une paroi ou une poche pour provoquer un mélange.

Au contraire, dans l'invention décrite ci-dessus, l'innovation réside dans le fait que le cordon de déchirure a deux fonctions distinctes — la première ouvrir le boudin d'eau pour déclencher la réaction, mais également ouvrir l'opercule pour permettre la chauffe des aliments contenus dans la barquette supérieure. Il est vrai que dans beaucoup de barquettes actuelles, l'opercule qui sépare la barquette de chauffe de la barquette alimentaire n'existe pas.

Le fait de ne retirer à l'opercule qu'une faible bande pour le passage de la vapeur permet audit opercule de continuer son autre fonction de protection sur le plan de la sécurité et de l'hygiène.

L'invention concerne également des moyens nouveaux pour déclencher la réaction.

Le cordon de déchirure, selon l'invention, est relié par fixation à une des extrémités du boudin d'eau, puis il passe entre la partie supérieure du boudin d'eau et la partie inférieure de l'opercule, puis entre la partie supérieure de l'opercule et le fond de la barquette alimentaire. Ledit cordon forme un S ou un U qui, dans un premier temps, déchire l'opercule de sécurité, et, dans un second temps, ouvre le boudin d'eau.

Pour les produits qui sont congelés, la barquette de chauffe, selon l'invention, comporte quelques moyens techniques en plus. Ainsi, en plus du fait que l'eau du boudin soit additionnée de produit antigel, suffisamment pour atteindre les moins 40°C sans subir de changement physique, la chaux vive doit être emballée sous vide dans la barquette mais elle doit être protégée du contact de l'aluminium par une enveloppe de polystyrène ou d'un quelconque matériau ou complexe anti-givrant et/ou absorbant, de façon à ce que, au moment de la décongélation des aliments et pendant toute la durée nécessaire à cette opération, le suintement de givre qui se serait formé à l'intérieur de la barquette de chauffe ne vienne mettre en combustion prématurée la chaux vive.

L'invention concerne une barquette jetable et une barquette rechargeable.

La barquette rechargeable est conçue principalement pour servir aux particuliers (campeurs, plaisanciers, etc...) dont la préparation des plats est différente de celle des Sociétés d'Alimentation et demande souvent à réchauffer des morceaux de viande entiers, tel que escalopes ou quiches lorraines, pizzas et autres.

La barquette comporte, en plus, un couvercle qui a trois fonctions principales:

- a)  celle de protéger les aliments et d'empêcher qu'ils se renversent,
- b)  il peut servir de plat soit pour manger, soit pour découper,
- c)  il sert également dans certains cas d'étuve.

Dans les pays nordiques, par moins 15 ou 20°C, il est difficile, dans une barquette conventionnelle, de réchauffer de la nourriture convenablement. Les aliments du fond seraient chauds ceux du dessus seraient froids. Le couvercle est donc fait de deux parois, extérieur en polypropylène et l'intérieur soit en polypropylène soit en aluminium, entre les deux un vide, à la fixation du couvercle des petites cheminées qui communiquent avec la chambre formée par la superposition des deux cloisons et qui communiquent également avec la chambre de chauffe de la barquette. La vapeur passe alors dans le couvercle et réchauffe d'une manière égale et suffisante toute la nourriture de la barquette alimentaire.

Les dessins ci-joints donnés à titre d'exemple indicatif et non limitatif permettent de comprendre aisément l'invention, ils représentent un mode de réalisation préféré selon l'invention.

La figure 1 est une vue en perspective, vue de côté du récipient à chauffage intégré selon l'invention.

La figure 2 est une vue en coupe de l'entrée du support du récipient pour le tiroir de produits réactifs avec son mode d'ouverture de la ou des poches d'eau.

La figure 3 est une vue en coupe d'un sac de produits réactifs.

La figure 4 est une vue en coupe longitudinale de la barquette de chauffe.

La figure 5 est une vue en coupe longitudinale de l'ensemble de la barquette-support de protection avec sa barquette de chauffe et sa barquette alimentaire et

La figure 6 est une vue en coupe longitudinale de l'ensemble de la barquette-support de protection avec sa barquette de chauffe et sa barquette alimentaire et, de plus, avec son couvercle.

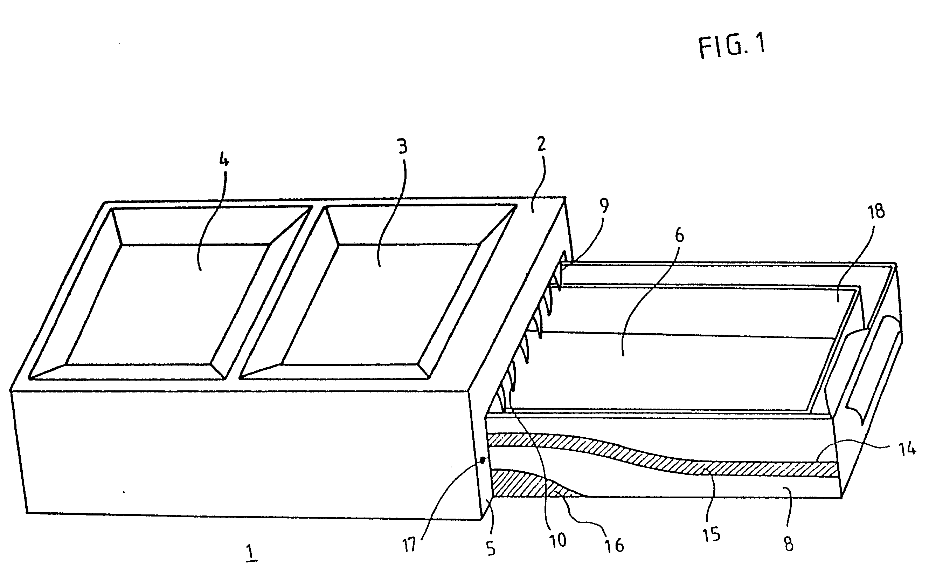

Le récipient 1, représenté à la figure 1 est composé d'un support 2 qui comporte un ou plusieurs logements 3 et 4. Sur le côté 5 du support 2 est aménagé une ouverture 6. Cette ouverture 6 permet à un logement, qui contient le ou les produits réactifs (non représentés) d'entrer ou de sortir comme un tiroir 8. Les produits réactifs qui peuvent être divers tels que de l'oxyde de calcium ou chaux vive et de l'eau sont séparés et emballés dans des sacs plastiques étanches. A l'entrée de l'ouverture 6 est disposé un moyen tranchant 9 telle qu'une herse dont les pics 10 au passage desdits sacs vont les ouvrir et permettre le mélange des produits réactifs qui permettent la réaction chimique et le chauffage desdits produits alimentaires disposés dans les logements 3 et 4.

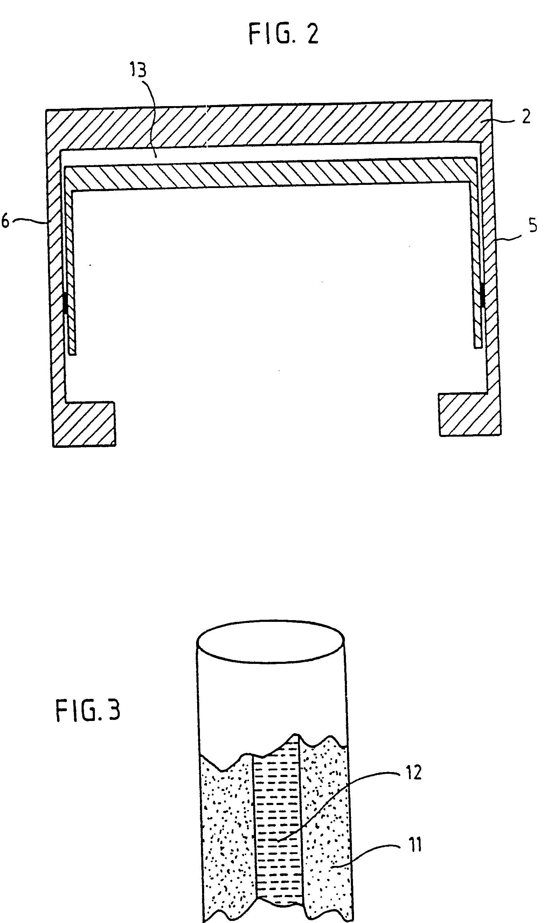

Dans la figure 3, est représenté en coupe un sac contenant les réactifs dans des compartiments, en l'occurence à la périphérie l'oxyde de calcium dans un compartiment 11 et au centre l'eau dans un compartiment 12. Dans la figure 2 est représenté le support 2 avec son ouverture 6 sur le côté 5. Selon une variante, l'ouverture 6 comporte une fente 13 dans laquelle, à l'engagement du tiroir 8, vient s'engager une languette qui se trouve sur les sacs de produits réactifs. En enfonçant le tiroir 8 dans son logement, la languette est pincée dans la fente 13 et déchire le ou les sacs de réactifs ce qui provoque le mélange et amorce aussitôt la réaction chimique.

Le logement tiroir 8 comporte sur ses côtés 14 des rampes de guidage 15 et 16 qui s'engagent dans un galet 17 lequel fait partie d'une pièce mobile basculante sur laquelle est monté le moyen contendant ou coupant 9. Ainsi, lorsque le tiroir 8 est complètement dégagé de son support 2, les dents 10 de la herse 9 n'apparaissent pas. L'utilisateur dépose une recharge de produits réactifs dans le logement dudit tiroir. En poussant le tiroir 8 dans son support par le ou les galets 17, la herse 9 bascule et vient sur les sacs de produits réactifs qu'elle ouvre aussitôt. L'intérêt de ce mode de réalisation est d'obtenir un récipient à chauffage intégré qui soit rechargeable en produits réactifs donc toujours fonctionnel.

Selon une autre variante, selon l'invention le récipient à chauffage intégré peut être jetable. Le support 18 comporte un ou plusieurs logements 19 pour les produits alimentaires.

Un logement disposé en dessous du logement contenant les aliments comporte les produits réactifs oxyde de chaux et le réservoir d'eau. Le logement qui comporte les produits réactifs et est fermé de manière étanche par un opercule.

Un moyen d'ouverture permet, après avoir fracturé une plaque ou fenêtre de protection, de tirer sur un cordon qui ouvre le sac contenant l'eau et provoque ainsi la réaction.

Ledit sac d'eau peut également être pourvu d'un moyen faisant office de valve anti-retour qui permet de doser l'écoulement de l'eau et de contrôler ainsi la réaction chimique donc le chauffage.

Dans certains cas, il peut être intéressant de conserver ces récipients alimentaires au congélateur pour avoir des produits surgelés. De manière à ce que la poche d'eau ne gèle pas ou n'éclate pas, il est utile de prévoir d'ajouter dans l'eau un produit qui abaisse le point de congélation, tel que de l'Emkanol ® ou de l'alcool à brûler.

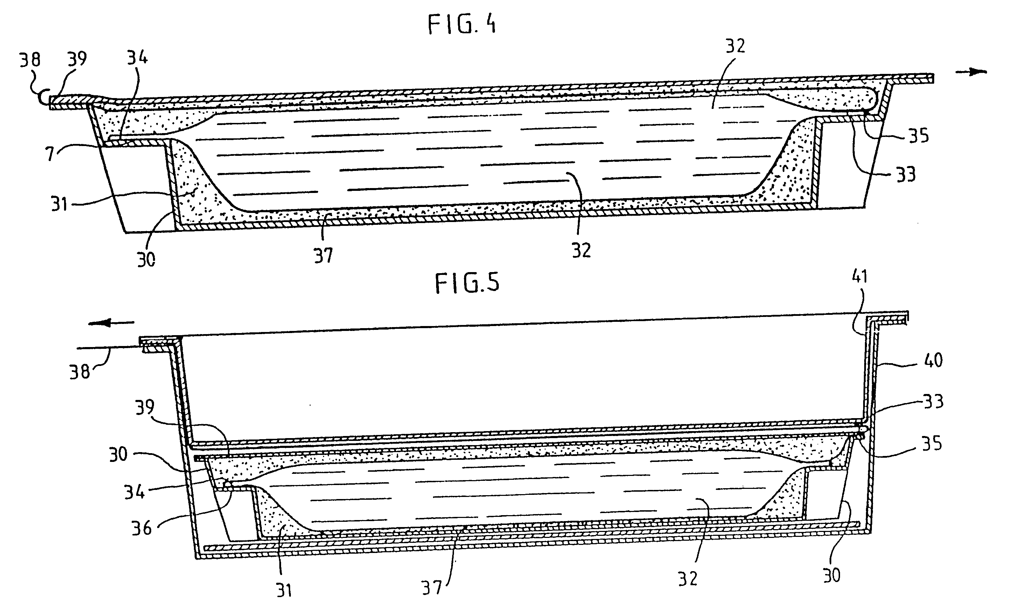

Dans la figure 4, on peut voir la barquette de chauffe 30, avec la chaux vive 31 et son boudin d'eau 32. Ledit boudin d'eau 32 est suspendu par ses extrémités 33 et 34, qui reposent sur des coussinets 35 et 36, au-dessus du fond 37 de ladite barquette de chauffe 30.

A l'extrémité 34 du boudin 32 est fixé un cordon de déchirure 38. Ledit cordon 38 passe, dans la figure 4, sous l'opercule de sécurité 39.

Le cordon de déchirure 38 peut également être disposé comme représenté dans la figure 2. Ces deux figures 7 et 8 mettent bien en évidence la double fonction du cordon de déchirure 38 décrite plus haut.

Dans la figure 4 le cordon de déchirure 38 passe sur la paroi inférieure, il ressort sous l'extrémité 34 entre le coussinet 36 et le point de fixation du boudin.

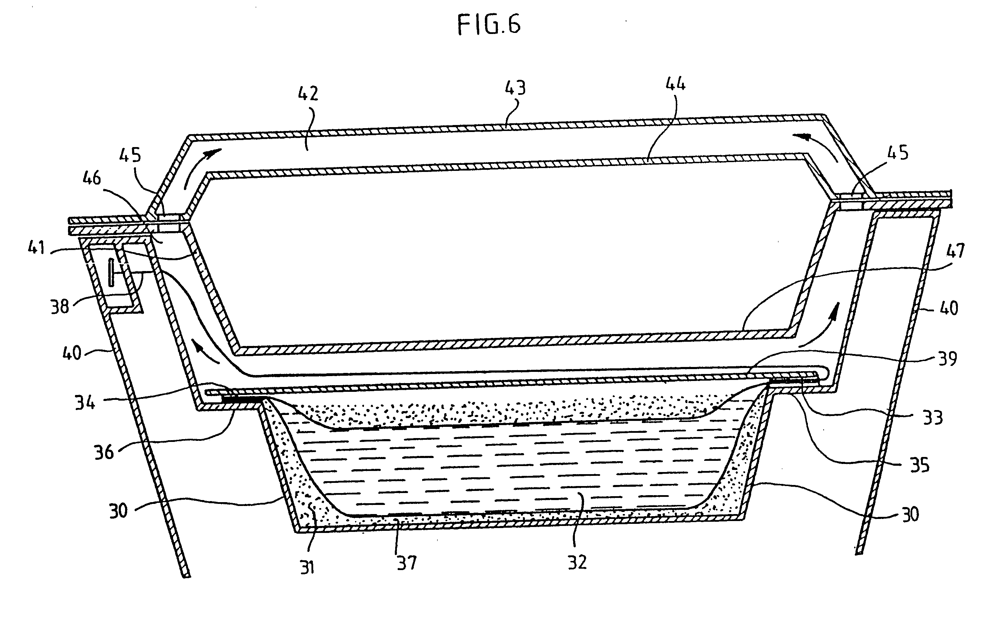

Dans la figure 5, le cordon de déchirure 38 part de l'extrémité 33 du boudin d'eau 32, passe sur la paroi supérieure de l'opercule 39, il vient contre la paroi intérieure de la barquette de protection ou barquette-support 40 pour venir sortir au niveau du rebord de celle-ci et du rebord de la barquette alimentaire 41.

La figure 5 montre également le support, ou barquette de protection qui fait office de logement pour la barquette de chauffe, mais également pour la barquette alimentaire 41.

La figure 6 représente un mode de réalisation de barquette auto-chauffante, comportant un couvercle 42. Ledit couvercle est composé de deux parties 43 et 44. Le couvercle 42 se fixe par de petites cheminées 45 qui se fixent avec la chambre 46 formée par le fond 47 de la barquette alimentaire 41 et l'opercule 39 ou la chambre de la barquette de chauffe 30.

**Revendication**

1. Récipient alimentaire jetable à chauffage intégré comportant une barquette-support (40) dans laquelle est logée une barquette alimentaire (41) contenant les aliments à chauffer et en dessous de laquelle est disposée une barquette (30) de chauffe contenant deux produits chimiques qui, mélangés, produisent une réaction exothermique, l'un des produits étant de l'eau contenue dans un boudin (32) ou poche étanche, l'autre produit étant de la chaux vive répartie directement dans le reste de la barquette, un cordon (38) de déchirure étant fixé sur la poche d'eau d'une manière telle que la traction sur ledit cordon déchire la poche d'eau, caractérisé en ce que
la barquette (30) de chauffe est fermée de façon étanche par un opercule d'étanchéité (39), que le boudin (32) est suspendu par ses extrémités sur des coussinets (35, 36) prévus à cet effet, juste au dessus du fond (37) de ladite barquette de manière à laisser un espace entre la paroi inférieure du boudin et ledit fond, que le cordon (38) de déchirure est agencé de manière à remplir, en plus de la fonction consistant à déchirer et à ouvrir le boudin d'eau, une deuxième fonction consistant à ouvrir dans l'opercule (39) un passage pour la vapeur d'eau.

2. Récipient alimentaire jetable selon la revendication 1 caractérisé par le fait
que la barquette-support, ou barquette de protection (40), contient au fond la barquette de chauffe (30) et au-dessus d'elle la barquette alimentaire (41), l'opercule (39) étant disposé entre ces deux barquettes (30 et 41).

3. Récipient alimentaire jetable selon la revendication 1 caractérisé par le fait
que, dans le cas de barquettes prévues pour être placées dans un congélateur la chaux vive est emballée sous vide dans une enveloppe étanche, anti-givrante ou absorbant de manière à éviter, pendant la période de décongélation des aliments, un suintement ou une fonte de givre à l'intérieur de la barquette de chauffe (30) et qui enclencherait, inopinément, la réaction de la chaux vive (31).

4. Récipient alimentaire jetable selon la revendication 1 caractérisé par le fait
qu'un espace vide d'environ 5 millimètres est aménagé entre la barquette de chauffe (30) et la barquette alimentaire (41), ledit vide augmentant la capacité de chauffage dudit dispositif.

5. Récipient alimentaire jetable selon la revendication 1 caractérisé par le fait
qu'il comporte un couvercle (42), composé de deux parois (43 et 44) délimitant un espace communiquant par des cheminées (45), avec la chambre (46) formée par le fond (47) de la barquette alimentaire (41) et l'opercule (39) ou la chambre de la barquette de chauffe (30) ainsi que des moyens de fixation du couvercle sur la barquette-support (40).

6. Récipient alimentaire jetable selon la revendication 1 caractérisé par le fait
que le boudin d'eau (32) est flanqué, dans le sens de sa longueur au centre de la paroi inférieure, d'un cordon de déchirure, d'une longueur étudiée en fonction des dimensions du boudin d'eau (32); ledit cordon de déchirure est fixé au boudin (32); ce cordon de déchirure doit avoir une longueur suffisante pour revenir vers l'arrière et sortir de la "barquette de protection" (40) par un orifice servant également de cheminée d'évacuation de vapeur; cet orifice étant obturé pendant le stockage.

7. Récipient alimentaire jetable selon l'une quelconque des revendications 1 ou 6 caractérisé par le fait
que sur les extrémités avant du boudin d'eau (32) et de l'opercule (39), de chaque côté du cordon de déchirure, une amorce de déchirure peut être pratiquée.

8. Récipient alimentaire jetable selon l'une quelconque des revendications 1 ou 6 caractérisé par le fait
que le cordon de déchirure est relié fixé à une des extrémités du boudin d'eau (32), puis il passe entre la partie supérieure du boudin d'eau et la partie inférieure de l'opercule (39), puis entre la partie supérieure de l'opercule (39) et le fond de la barquette alimentaire (41).

9. Récipient alimentaire jetable selon l'une quelconque des revendications 1 ou 6 caractérisé par le fait
que le cordon est en forme de U.

10. Récipient alimentaire jetable selon l'une quelconque des revendications 1 ou 6 caractérisé par le fait
que le cordon est en forme de S.

11. Récipient alimentaire jetable selon l'une quelconque des revendications 1 ou 6 caractérisé par le fait
qu'à l'extrémité (33) du boudin (32) est fixé un cordon de déchirure (38), ledit cordon (38) passe, sous l'opercule de sécurité (39).

12. Récipient alimentaire jetable selon l'une quelconque des revendications 1 ou 6 caractérisé par le fait
que le cordon de déchirure (38) part de l'extrémité (33) du boudin d'eau (32) passe sur la paroi supérieure de l'opercule (39), puis vient contre la paroi intérieure de la barquette de protection ou barquette-support (40) pour venir sortir au niveau du rebord de celle-ci et du rebord de la barquette alimentaire (41).

13. Récipient alimentaire rechargeable à chauffage intégré comportant un support (2) muni d'au moins un logement recevant au moins une barquette (3, 4) alimentaire contenant les produits

11

alimentaires à chauffer, des moyens (10) tranchants disposés sur le support (2), celui-ci étant pourvu sur un de ses côtés (5) d'une ouverture (6), le récipient alimentaire comportant en outre un moyen de logement (8) dans lequel sont disposés deux produits réactifs emballés et conservés de manière étanche, ledit moyen de logement (8) pouvant être mis en place dans l'ouverture (6) et enfoncé dans celle-ci par une action manuelle, les moyens (10) tranchants ouvrant alors l'emballage desdits produits réactifs de manière à mettre ceux-ci en contact pour déclencher la réaction exothermique, caractérisé en ce que

le moyen de logement (8) abritant les produits réactifs est conformé en tiroir (8) susceptible d'entrer et de sortir de l'ouverture (6), que sur les côtés du tiroir (8) sont disposées des rampes de guidage (15, 16) coopérant avec des galets (17) disposés de part et d'autre du côté (5) du support (2), lesdits galets (17) étant solidaires des moyens ( 10) tranchants, ceux-ci étant disposés à l'entrée dudit logement (8), les rampes de guidage (15, 16), les galets (17) et les moyens (9) tranchants étant agencés d'une manière telle, que lorsque le logement (8) est dégagé du support (2), les moyens tranchants n'apparaissent pas et lorsque le logement (8) est poussé dans le tiroir, les moyens (9) tranchants basculent pour venir sur les sacs de produits réactifs et ouvrir ceux-ci.

14. Récipient alimentaire rechargeable à chauffage intégré comportant un support (2) muni d'au moins un logement recevant au moins une barquette (3, 4) alimentaire contenant les produits alimentaires à chauffer, ledit support étant pourvu, sur un de ses côtés (5), d'une ouverture (6), le récipient alimentaire comportant en outre un moyen de logement dans lequel sont disposés deux produits réactifs emballés et conservés de manière étanche, ledit moyen de logement pouvant être mis en place dans l'ouverture et enfoncé dans celle-ci par une action manuelle, des moyens d'ouverture ouvrant alors l'emballage desdits produits réactifs de manière à mettre ceux-ci en contact pour déclencher la réaction exothermique, caractérisé en ce que

le moyen de logement (8) abritant les produits réactifs est conformé en tiroir (8) susceptible d'entrer et de sortir de l'ouverture (6), le côté (5) du support (2) comportant une fente (13) dans laquelle, lorsque le tiroir (8) est entré dans l'ouverture (6) du support, vient s'engager et se pincer une languette fixée sur les sacs de produits réactifs par introduction dudit tiroir (8), ladite languette ouvrant sur toute leur longueur, les sacs.

15. Récipient alimentaire rechargeable à chauffage intégré selon l'une quelconque des revendications 1, 13 ou 14 caractérisé par le fait que

la poche d'eau peut comporter un moyen faisant office de valve anti-retour qui permet de doser l'écoulement de l'eau et de contrôler ainsi le déroulement de la réaction.

16. Récipient alimentaire rechargeable à chauffage intégré selon l'une quelconque des revendi-

12

cations 13 ou 14 caractérisé par le fait

que les sacs de réactifs sont composés d'un boudin qui comporte un compartiment central (12) contenant de l'eau et un compartiment périphérique contenant de l'oxyde de chaux ou de l'hydroxyde de calcium.

17. Récipient alimentaire rechargeable à chauffage intégré selon l'une quelconque des revendications 1, 13, 14, 15 ou 16 caractérisé par le fait

que la poche contenant de l'eau peut contenir un autre produit qui abaisse son point de congélation de manière à ce que lesdits récipients puissent être placés dans un congélateur, ledit produit pouvant être soit de l'Emkanol ® soit de l'alcool à brûler.

**Patentansprüche**

1. Einweg-Nahrungsmittelbehälter mit integrierter Heizung, umfassend einen Trägerbehälter (40), in welchem ein Nahrungsmittelbehälter (41) mit zu erwärmenden Nahrungsmitteln aufgenommen und unter welchem ein Heizbehälter (30) angeordnet ist, der zwei chemische Produkte enthält, welche, miteinander vermischt, eine exotherme Reaktion hervorrufen, wobei eines der Produkte Wasser ist, das sich in einem dicht verschlossenen Schlauch (32) oder Beutel befindet, und das andere Produkt Ätzkalk ist, welcher direkt in dem Rest des Behälters verteilt ist, wobei ein Reißband (38) an dem Wasserbeutel dergestalt befestigt ist, daß die Ausübung von Zug auf das Band den Wasserbeutel aufreißt, *dadurch gekennzeichnet,* daß der Heizbehälter (30) mittels eines Dichtungsdeckels (39) abdichtend verschlossen ist, daß der Schlauch (32) mit seinen Enden an hierzu vorgesehenen Lagern (35, 36) aufgehängt ist, und zwar unmittelbar über dem Boden (37) des genannten Behälters dergestalt, daß ein Zwischenraum zwischen der Innenwandung des Schlauches und dem genannten Boden verbleibt, daß das Reißband (38) so angeordnet ist, daß es zusätzlich zu der Funktion, den Wasserschlauch aufzureißen beziehungsweise zu öffnen, eine zweite Funktion erfüllt, nämlich, in dem Deckel (39) einen Durchgang für den Wasserdampf zu öffnen.

2. Einweg- Nahrungsmittelbehälter nach Anspruch 1, *dadurch gekennzeichnet,* daß der Trägerbehälter, oder Schutzbehälter (40), am Boden den Heizbehälter (30) und über diesem den Nahrungsmittelbehälter (41) enthält, wobei der Deckel (39) sich zwischen diesen beiden Behältern (30 und 41) befindet.

3. Einweg- Nahrungsmittelbehälter nach Anspruch 1, *dadurch gekennzeichnet,* daß bei Behältern, die für die Unterbringung in Gefriertruhen bestimmt sind, der Ätzkalk im Vakuum in eine dichte, einen Vereisungsschutz bietende oder absorbierende Hülle verbracht wird, um während der Auftauperiode der Nahrungsmittel ein Lecken oder eine Frostschmelze im Innern des Heizbehälters (30) zu verhindern, was eine unerwünschte Reaktion des Ätzkalks (31) auslösen würde.

4. Einweg-Nahrungsmittelbehälter nach Anspruch 1, *dadurch gekennzeichnet,* daß ein evakuierter Raum von etwa 5 mm zwischen dem Heizbehälter (30) und dem Nahrungsmittelbehälter (41) vorgesehen ist, wobei das Vakuum die Heizkapazität der Vorrichtung erhöht.

5. Einweg-Nahrungsmittelbehälter nach Anspruch 1, *dadurch gekennzeichnet,* daß dieser einen Deckel (42) umfaßt, welcher aus zwei einen Raum begrenzenden Wandungen (43 und 44) besteht, der über Durchlässe (45) mit der durch den Boden (47) des Nahrungsmittelbehälters (41) und den Deckel (39) beziehungsweise die Kammer des Heizbehälters (30) gebildeten Kammer (46) in Verbindung steht, sowie Einrichtungen zur Befestigung des Deckels an dem Trägerbehälter (40).

6. Einweg-Nahrungsmittelbehälter nach Anspruch 1, *dadurch gekennzeichnet,* daß der Wasserschlauch (32) in Längsrichtung in der Mitte der unteren Wandung von einem Reißband einer Länge flankiert ist, die sich nach den Abmessungen des Wasserschlauches (32) bestimmt; das genannte Reißband ist an dem Schlauch (32) befestigt; es muß genügend lang sein, um zurückziehbar zu sein und aus dem "Schutzbehälter" (40) durch eine Öffnung austreten zu können, welche auch als Durchlaß für den Abzug von Dampf dient, wobei diese Öffnung während der Lagerung geschlossen ist.

7. Einweg-Nahrungsmittelbehälter nach irgendeinem der Ansprüche 1 bis 6, *dadurch gekennzeichnet,* daß an den Enden vor dem Wasserschlauch (32) und dem Deckel (39), zu beiden Seiten des Reißbandes, ein Reißstück anordenbar ist.

8. Einweg-Nahrungsmittelbehälter nach irgendeinem der Ansprüche 1 bis 6, *dadurch gekennzeichnet,* daß das Reißband mit einem der Enden des Wasserschlauches (32) fest verhaftet ist, dann zwischen dem oberen Teil des Wasserschlauches und dem unteren Teil des Deckels (39) und anschließend zwischen dem oberen Teil des Deckels (39) und dem Boden des Nahrungsmittelbehälters (41) verläuft.

9. Einweg-Nahrungsmittelbehälter nach irgendeinem der Ansprüche 1 bis 6, *dadurch gekennzeichnet,* daß das Band U-förmig ist.

10. Einweg-Nahrungsmittelbehälter nach irgendeinem der Ansprüche 1 bis 6, *dadurch gekennzeichnet,* daß das Band S-förmig ist.

11. Einweg-Nahrungsmittelbehälter nach einem der Ansprüche 1 bis 6, *dadurch gekennzeichnet,* daß am Ende (33) des Schlauches (32) ein Reißband (38) befestigt ist, wobei das Reißband unter dem Sicherheitsdeckel (39) hindurchläuft.

12. Einweg-Nahrungsmittelbehälter nach irgendeinem der Ansprüche 1 bis 6, *dadurch gekennzeichnet,* daß das Reißband (38) vom Ende (33) des Wasserschlauches (32) ausgehend über der oberen Wandung des Deckels (39) verläuft, dann die Innenwandung des Schutzbehälters oder Trägerbehälters (40) erreicht, um alsdann auf Höhe von dessen Rand und des Randes des Nahrungsmittelbehälters (41) auszutreten.

13. Nachfüllbarer Nahrungsmittelbehälter mit integrierter Heizung, umfassend einen Rahmen (2) mit mindestens einer Aufnahme für mindestens einen Nahrungsmittelbehälter (3, 4), welcher zu erwärmende Nahrungsmittel enthält, an dem Rahmen (2) angebrachte Schneideinrichtungen (10), wobei der Rahmen an einer seiner beiden Seiten (5) eine Öffnung (6) aufweist, wobei der Nahrungsmittelbehälter ferner eine Aufnahme (8) aufweist, in welcher sich zwei dicht verpackte konservierte Reaktionsprodukte befinden, wobei die Aufnahme (8) manuell in die Öffnung (6) einbringbar und durch diese hindurchschiebbar ist, wobei die Schneideinrichtungen (10) nunmehr die Verpackung der Reaktionsprodukte dergestalt öffnen, um diese zur Auslösung der exothermen Reaktion in Kontakt zu bringen, *dadurch gekennzeichnet,* daß die die Reaktionsprodukte enthaltende Aufnahme (8) als Schublade (8) ausgebildet ist, welche in die Öffnung (6) einschiebbar und aus dieser herausziehbar ist, daß an den Seiten der Schublade (8) Führungsschienen (15, 16) vorgesehen sind, welche mit Rollen (17) zusammenwirken, die an beiden Seiten der Seitenwandung (5) des Rahmens (2) angeordnet sind, wobei die genannten Rollen (17) mit den Schneideinrichtungen (10) fest verbunden sind, wobei diese am Eingang der Aufnahme (8) vorgesehen sind, wobei die Führungsschienen (15, 16), die Rollen (17) und die Schneideinrichtungen (9) dergestalt ausgebildet sind, daß, wenn die Aufnahme (8) von dem Rahmen (2) freigegeben wird, die Schneideinrichtungen nicht in Erscheinung treten und daß, wenn die Aufnahme (8) in die Schublade hineingeschoben wird, die Schneideinrichtungen (9) über die Beutel mit den Reaktionsprodukten verschwenkt werden, um diese zu öffnen.

14. Nachfüllbarer Nahrungsmittelbehälter mit integrierter Heizung, umfassend einen Rahmen (2) mit mindestens einer Aufnahme für mindestens einen Nahrungsmittelbehälter (3, 4), welcher zu erwärmende Nahrungsmittel enthält, wobei der genannte Rahmen an einer seiner Seiten (5) mit einer Öffnung (6) versehen ist, wobei der Nahrungsmittelbehälter darüberhinaus eine Aufnahme enthält, in welcher sich zwei dicht verpackte und konservierte Reaktionsprodukte befinden, wobei die genannte Aufnahme manuell in die Öffnung verbringbar und in diese einschiebbar ist, wobei Öffnungseinrichtungen alsdann die Verpackung der genannten Reaktionsprodukte öffnen, um diese zur Auslösung der exothermen Reaktion in Kontakt zu bringen, *dadurch gekennzeichnet, daß* die die Reaktionsprodukte enthaltende Aufnahme als Schublade (8) ausgebildet ist, welche in die Öffnung (6) einschieb- und aus dieser herausziehbar ist, wobei die Seite (5) des Rahmens (2) einen Spalt (13) aufweist, in welchen bei hineingeschobener Schublade (8) in die Öffnung (6) des Rahmens eine Zunge eingreift, die an den Beuteln mit den Reaktionsprodukten befestigt ist und beim Hineinschieben der Schublade (8) einer Klemmwirkung unterworfen wird, um die Beutel über ihre gesamte Länge aufzuschlitzen.

15. Nachfüllbarer Nahrungsmittelbehälter mit integrierter Heizung nach irgendeinem der Ansprüche 1, 13 oder 14, *dadurch gekennzeichnet, daß* der Wasserbeutel eine als Rückschlagventil wirkende Einrichtung aufweisen kann, welche eine Dosierung des auslaufenden Wassers und damit eine Steuerung des Reaktionsablaufs ermöglicht.

16. Nachfüllbarer Nahrungsmittelbehälter mit integrierter Heizung nach irgendeinem der Ansprüche 1, 13 oder 14, *dadurch gekennzeichnet, daß* die Reaktionsbeutel aus einem Schlauch mit einem mittigen, Wasser enthaltenden Abschnitt (12) und einem am Umfang befindlichen Abschnitt bestehen, welcher Calciumoxid oder Calciumhydroxid enthält.

17. Nachfüllbarer Nahrungsmittelbehälter mit integrierter Heizung nach irgendeinem der Ansprüche 1, 13, 14, 15 oder 16, *dadurch gekennzeichnet, daß* der Wasser enthaltende Beutel ein anderes Produkt enthalten kann, das seinen Gefrierpunkt dergestalt senkt, daß die genannten Behälter in einer Gefriertruhe untergebracht werden können, wobei das genannte Produkt entweder Emkanol [R] oder Brennspiritus sein kann.

**Claims**

1. A non-returnable food container with integrated heating, comprising a carrier vessel (40) in which a food vessel (41) with food to be heated is received and below which a heating vessel (30) containing two chemical products is disposed, which products, when mixed, produce an exothermic reaction, one of said products being water contained in a sealed tube (32) or bag and the other product being caustic lime which is distributed directly in the remainder of the container, with a tear strip (38) being attached to the water bag for tearing the water bag open as traction is applied to said strip, *characterized* in that
the heating vessel (30) is sealingly closed by means of a sealing lid (39), that the tube (32) is suspended with its ends in bearings (35, 36) provided therefor, i. e. directly above the bottom (37) of said vessel so that an intermediate space between the inner wall of said tube and said bottom remains, that the tear strip (38) is disposed so as to fulfil, in addition to the function of tearing the water bag and opening it, a second function, namely of opening in the lid (39) a passage for the water steam.

2. The non-returnable food container according to claim 1, *characterized* in that
the carrier vessel, or protective vessel (40), contains the heating vessel (30) at the bottom and above the same the food vessel (41), with the lid (39) being located between these two vessels (30) and (41).

3. The non-returnable food container according to claim 1, *characterized* in that
in the case of vessels intended to be placed in refrigerators the caustic lime is put – using a vacuum – in a sealed wrapping offering protection against icing or having absorbing characteristics, in order to avoid, during defrosting of the food, any leakage or the formation of an ice melt in the interior of the heating vessel (30), susceptible of declenching an undesired reaction of the caustic lime (31).

4. The non-returnable food container according to claim 1, *characterized* in that
an evacuated space of about 5 mm is provided between the heating vessel (30) and the food vessel (41), with the vacuum increasing the heating capacity of the apparatus.

5. The non-returnable food container according to claim 1, *characterized* in that
the same includes a lid (42) consisting of two walls (43 and 44) defining a space, which space communicates with the chamber (46) formed by the bottom (47) of the food vessel (41) and the lid (39) respectively the chamber of the heating vessel (30), and means for attaching the lid to the carrier vessel (40).

6. The non-returnable food container according to claim 1, *characterized* in that
the water tube (32) is flanked, in longitudinal direction in the middle of the lower wall, by a tear strip of a length which is determined by the dimensions of the water tube (32); said tear strip is attached to the tube (32); it has to be sufficiently long so as to be retractable and to permit exit from the "protective container" (40) through an opening which also serves as a passage for the discharge of steam, this opening being closed during storage.

7. The non-returnable food container according to any of claims 1 to 6, *characterized* in that
at the ends before the water tube (32) and the lid (39), on either side of the tear strip, a tear piece may be disposed.
8. The non-returnable food container according to any of claims 1 to 6, *characterized* in that

17

the tear strip is firmly attached to one of the ends of the water tube (32), then passes between the upper part of the water tube and the lower part of the lid (39) and subsequently between the upper part of the lid (39) and the bottom of the food vessel (41).

9. The non-returnable food container according to any of claims 1 to 6, *characterized* in that the strip is U-shaped.

10. The non-returnable food container according to any of claims 1 to 6, *characterized* in that the strip is S-shaped.

11. The non-returnable food container according to any of claims 1 to 6, *characterized* in that to the end (33) of the tube (32) a tear strip (38) is secured, with the tear strip passing below the safety lid (39).

12. The non-returnable food container according to any of claims 1 to 6, *characterized* in that starting from the end (33) of the water tube (32) the tear strip (38) passes over the upper wall of the lid (39), then reaches the inner wall of the protective vessel or carrier vessel (40) in order to then exit at the level of its rim or the rim of the food vessel (41).

13. A rechargeable food container with integrated heating, comprising a frame (2) with at least one receiving means for at least one food vessel (3, 4) containing food stuffs to be heated, cutting means (10) mounted on the frame (2), with the frame having an opening (6) on one of its two sides (5), said food vessel furthermore including a receiving means (8) in which two sealingly packed conserved reaction products are contained, with the receiving means (8) being adapted to be placed manually into the opening (6) and to be pushed therethrough, the cutting means (10) now opening the packaging of the reaction products so as to bring them into contact for declenching the exothermic reaction, *characterized* in that the receiving means (8) containing the reaction products is designed as a drawer (8) apt to be pushed into the opening (6) and to be withdrawn therefrom, in that on the sides of the drawer (8) guide rails (15, 16) are provided, cooperating with rolls (17) which are disposed on either side of the lateral wall (5) of the frame (2), said rolls (17) being firmly secured to the cutting means (10), these being provided at the entrance of the receiving means (8), with the guide rails (15, 16), the rolls (17) and the cutting means (9) being designed such that, as the receiving means (8) is released by the frame (2), the cutting means do not appear, and in that, when the receiving means is pushed into the drawer, the cutting means (9) are swung over the bags with the reaction products in order to open them.

14. A rechargeable food container with integrated heating, comprising a frame (2) having at least one receiving means for at least one food vessel (3, 4) containing food stuffs to be heated, said frame being provided with an opening (6) on one of its sides (5), with the food vessel additionally containing a receiving means in which two sealingly packed and conserved reaction products are contained, said receiving means being adapted to be placed and pushed into the opening manually, with the opening means subsequently opening the packaging of said reaction products in order to bring them into contact to declench the exothermic reaction, *characterized* in that the receiving means containing the reaction products is designed as a drawer (8) adapted to be pushed into the opening (6) and to be retracted therefrom, with the side (5) of the frame (2) having a gap (13) which is engaged by a tongue as the drawer (8) is pushed into the opening (6) of the frame, said tongue being secured to the bags containing the reaction products and being subjected to a clamping effect as the drawer (8) is pushed in so as to tear the bags open over their entire lengths.

15. The rechargeable food container with integrated heating according to any of claims 1, 13 or 14, *characterized* in that the water bag may comprise a means having the effect of a check valve to facilitate dosing of the water running out and thus control of the course of the reaction.

16. The rechargebable food container with integrated heating according to any of claims 1, 13 or 14, *characterized* in that the reaction bags consist of a tube with a central, water-containing portion (12) and a portion located at the circumference, containing calcium oxide or calcium hydroxide.

17. The rechargeable food container with integrated heating according to any of claims 1, 13, 14, 15 or 16, *characterized* in that the water-containing bag may contain another product lowering its freezing point such that said vessels may be placed in a refrigerator, said product optionally being either Emkanol ® or methylated spirit.

10

FIG.1

FIG. 2

FIG. 3

## FIG. 4

## FIG.5

EP 0 079 286 B1

FIG.6